# EUROPÄISCHE PATENTSCHRIFT

(11) **EP 0 639 720 B1**
(45) Veröffentlichungstag und Bekanntmachung des Hinweises auf die Patenterteilung: **16.10.1996**
(21) Anmeldenummer: 94110478.8
(22) Anmeldetag: 06.07.1994
(51) Int. Cl.: F16B 21/06, F16B 5/06

(54) **Zweiteiliges Verbindungselement**
Two-part connection element
Elément de fixation en deux parties

(30) Priorität: 19.08.1993 DE 4327946
(43) Veröffentlichungstag der Anmeldung: 22.02.1995
(73) Patentinhaber: TRW United-Carr GmbH & Co. KG, D-67677 Enkenbach-Alsenborn (DE)
(72) Erfinder: Bockenheimer, Alexander, D-67307 Göllheim (DE)
(74) Vertreter: Schieschke, Klaus, Dipl.-Ing.

(56) Entgegenhaltungen:
- AU-B- 438 449
- DE-A- 3 815 927
- US-A- 2 132 950
- US-A- 3 357 292
- US-A- 4 012 155

## Beschreibung

Die Erfindung bezieht sich auf ein zweiteiliges Verbindungselement mit einer an einem Träger, insbesondere einer Kraftfahrzeugkarosserie befestigbaren Hülse, welche im dem Träger abgewandten Stirnbereich eine Wulst aufweist, und mit einem Einsatzteil mit einer im eingebauten Zustand die Wulst hintergreifenden Schulter.

Als Stand der Technik ist bereits ein derartiges Verbindungselement bekannt (DE-C-40 14 589), welches so gestaltet ist, daß das Einsatzteil eine quer zur Längsachse verlaufende Aussparung aufweist, in die ein weiteres Verbindungselement seitlich einschiebbar ist. Die Schulter des Einsatzteils wird hinter der Wulst der Hülse eingeklippt und stellt damit die Verbindung zu dem Träger, beispielsweise einer Kraftfahrzeugkarosserie, her. Bei dieser bekannten Ausführungsform ist sowohl zum Einbau als auch zur Demontage ein gleicher Kraftaufwand erforderlich; damit muß diese Haltewirkung so abgestimmt werden, daß einerseits nach Durchführung der Montage eine genügende Haltekraft vorliegt, andererseits zur Demontage die Haltekraft nicht so hoch ist, daß eine Zerstörung dieses Verbindungselementes auftreten könnte.

Aus der US-A-3 357 292 ist ein Befestigungselement bekannt, dessen Einsatzteil zwei Arme und dessen Hülse ein kreisförmiges Loch, das mittels eines Stäbchens in zwei gleiche Abschnitte geteilt ist, aufweist. Das Stäbchen hält die Arme nach Montage des Einsatzteils gespreizt. Durch die feste Lage des Stäbchen ist für die Montage trotz der Keilform des Stäbchen ein erhöhter Kraftaufwand erforderlich.

Weitere Verbindungselemente (DE-A- 28 30 415, US-A-4 369 947) sind so gestaltet, daß das Einsatzteil seitlich herausragende, federnde Arme aufweist, welche hinter entsprechende Aussparungen der Hülse greifen und damit ein Verklippen bewirken.

Demgegenüber besteht die Aufgabe der vorliegenden Erfindung darin, eine Konstruktion der eingangs genannten Art so auszubilden, daß eine höhere Abzugskraft als die Eindrückkraft erforderist, um die Montage einfacher zu gestalten, andererseits jedoch ein unerwünschtes Lösen des montierten Verbindungselementes zu vermeiden.

Diese Aufgabe wird erfindungsgemäß dadurch gelöst, daß die Hülse in einem dem Träger zugekehrten Bereich einen in der Längsachse federnd gelagerten, zentrischen Zapfen aufweist, und daß die Schulter des Einsatzteils aus mehreren, quer zur Längsachse federnden Armen besteht, welche innenseitig eine, den zentrischen Zapfen einlagernde Öffnung begrenzen. Durch das Zusammenwirken des federnd gelagerten zentrischen Zapfens mit der Öffnung im Bereich der federnden Arme wird bewirkt, daß eine höhere Abzugskraft erforderlich ist als die der Eindrückung. Hierdurch läßt sich die gesamte Konstruktion einerseits leicht montieren, wobei jedoch andererseits einer unerwünschten Demontage durch äußere Einflüsse vorgebaut wird.

In weiterer Ausgestaltung der Erfindung können die federnden Arme durch sich über die Schulter hinaus in Längsrichtung erstreckende Schlitze voneinander getrennt sein, wobei diese Schlitze bis zum Endbereich konisch zulaufen können. Hierdurch wird auf einfache Weise eine sehr gute Federwirkung der Arme erzielt.

Nach einem anderen Merkmal der Erfindung können sich an die Schulterabschnitte der Arme Zylindermantelabschnitte und im Endbereich liegende Kegelstumpfabschnitte anschließen. Durch diese Gestaltung des Einsatzteils wird eine Montageerleichterung über die Kegelstumpfabschnitte bewirkt, wobei nach Durchführung der Montage die Schulterabschnitte hinter der Wulst der Hülse liegen und die Zylindermantelabschnitte den Innenumfang der Hülse beaufschlagen, so daß eine gute Führung der gesamten Einheit gewährleistet ist.

In weiterer Ausgestaltung der Erfindung ist der zentrische Zapfen im Endbereich der Hülse angeordnet und ragt etwa in das untere Drittel der Hülse. Die Spitze des Zapfens kann hierbei Kegelstumpfform aufweisen. Durch diese konstruktive Gestaltung des zentrischen Zapfens ergibt sich eine weitere Erleichterung bei der Montage, wobei außerdem durch die spezielle Länge des Zapfens eine Abstimmung des Verhältnisses der Abzugskraft zur Eindrückkraft vorgenommen wird.

Um den Zapfen federnd anzuordnen, kann dieser über mindestens einen Steg in Längsrichtung mit dem Innenumfang der Hülse verbunden sein, wobei dieser Steg federnd gestaltet ist. Statt eines Steges können auch mehrere, vorzugsweise drei gleichmäßig über den Umfang verteilte Stege vorgesehen sein.

Vorteilhafte Weiterbildungen ergeben sich aus den Unteransprüchen.

Die Erfindung wird nachfolgend anhand von in der Zeichnung dargestellten Ausführungsbeispielen näher beschrieben. In der Zeichnung zeigen:
- Fig. 1: eine Seitenansicht der Hülse (Fig. 1a) bzw. einen Schnitt (Fig. 1b) gemäß Schnitt I-I in Fig. 2;
- Fig. 2: eine Draufsicht auf die Hülse nach Fig. 1;
- Fig. 3: eine perspektivische Ansicht der Hülse nach Fig. 1 und 2;
- Fig. 4: eine Seitenansicht des Einsatzteils, teils gebrochen;
- Fig. 5: eine Unteransicht auf das Einsatzteil nach Fig. 4;
- Fig. 6: eine andere Ausführungsmöglichkeit des Einsatzteils in Seitenansicht in schematischer Darstellung;
- Fig. 7: eine andere Ausführungsmöglichkeit der Hülse in perspektivischer Darstellung.

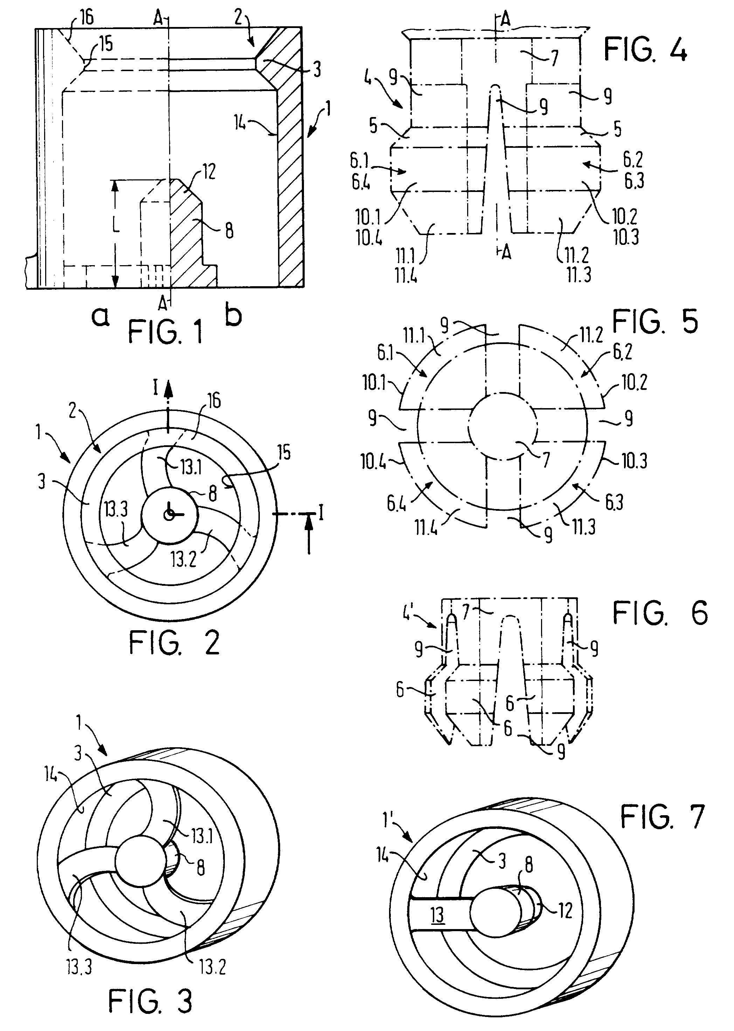

In Fig. 1 ist ein Teil eines zweiteiligen Verbindungselementes dargestellt; es handelt es sich hierbei um eine Hülse 1, welche in nicht näher dargestellter Weise mit dem unteren Endbereich an einem ebenfalls nicht näher dargestellten Träger, insbesondere einer Kraftfahrzeugkarosserie, verbunden wird. Der andere Teil des zweiteiligen Verbindungselementes ist in Fig. 4 und 5 näher dargestellt. Es handelt sich hierbei um ein Einsatzteil 4, welches mit einer Schulter 5 versehen ist. Die Hülse 1 weist in dem Träger abgewandten Stirnbereich 2 eine Wulst 3 auf, welche vorzugsweise umlaufend ausgebildet ist. Weiterhin ist die Hülse mit einer Innenwandung 14 versehen.

In dem Träger zugekehrten Stirnbereich besitzt die Hülse 1 einen in der Längsachse A-A federnd gelagerten, zentrischen Zapfen 8. Wie aus den Figuren 1, 2 und 3 ersichtlich, ist der Zapfen 8 über drei, gleichmäßig über den Innenumfang 14 verteilte Stege 13.1, 13.2, 13.3 mit der Hülse 1 verbunden. Diese drei Stege weisen quer zur Längsachse A-A gewölbte Form auf, wie insbesondere Fig. 2 und 3 zu entnehmen ist.

Die Länge L des Zapfens 8 ragt etwa in das untere Drittel der Hülse 1. Die Spitze des Zapfens 8 weist Kegelstumpfform 12 auf.

Nach Fig. 4 besteht die Schulter 5 des Einsatzteils 4 aus mehreren, quer zur Längsachse A-A federnden Armen 6.1, 6.2, 6.3 und 6.4. Diese federnden Arme begrenzen innenseitig eine Öffnung 7, deren Durchmesser auf den Durchmesser des zentrischen Zapfens 8 der Hülse 1 abgestellt ist.

Die federnden Arme 6.1, 6.2, 6.3 und 6.4 sind durch sich bis über die Schulter 5 hinaus in Längsrichtung erstreckende Schlitze 9 voneinander getrennt. Aus Fig. 4 geht hervor, daß diese Schlitze 9 bis zum Endbereich konisch zulaufen.

Fig. 4 ist darüber hinaus entnehmbar, daß an die Schulterabschnitte der Arme 6.1, 6.2, 6.3 und 6.4 Zylindermantelabschnitte 10.1, 10.2, 10.3 und 10.4 angrenzen. An diese schließen im Endbereich liegende Kegelstumpfabschnitte 11.1, 11.2, 11.3 und 11.4 an.

Die Schräge der Schulter 5 der Arme 6.1 bis 6.4 ist hierbei auf den unteren Bereich der Schräge der Wulst 3 der Hülse 1 abgestellt.

Im oberen Bereich kann das Einsatzteil 4 mit einem nicht näher dargestellten Halteelement verbunden sein.

Wird nun das Einsatzteil 4 von oben über den Stirnbereich 2 in die Hülse 1 eingesetzt, so werden die federnden Arme 6.1 - 6.4 infolge der Schlitze solange zusammengedrückt, bis die Schulter 5 des Einsatzteils 4 hinter dem unteren Bereich der Wulst 3 der Hülse 1 liegt. Beim Einführen der federnden Arme wird gleichzeitig der Zapfen 8 über den unteren Bereich der Hülse 1 nach außen gedrückt und lagert sich erst dann in der Öffnung 7 des Einsatzteils 4 ein, wenn die Schulter 5 des Einsatzteils 4 hinter dem unteren Bereich der Wulst 3 der Hülse 1 liegt.

In montierter Position lagert der zentrische Zapfen 8 der Hülse 1 in der Öffnung 7 des Einsatzteils 4. Damit sind die federnden Arme 6.1 - 6.4 durch den Zapfen 8 nach innen blockiert.

Bei der Demontage muß sich die Hülse 1 im Bereich der Wulst 3 dehnen, und zwar solange, bis die Schulter 5 des Einsatzteils 4 aus der unteren Schräge der Wulst 3 der Hülse 1 herausgeglitten ist und die Zylindermantelabschnitte 10.1 - 10.4 des Einsatzteils 4 im Bereich der Zylindermantelöffnung 15 der Hülse 1 liegen. Während dieses Vorganges gleitet die Öffnung 7 des Einsatzteils 4 aus den Zapfen 8 der Hülse 1, so daß danach die Demontage leichter erfolgen kann. Durch diese besondere Gestaltung ist eine höhere Auszugskraft bei der Demontage als Eindrückkraft bei Montage gewährleistet.

Die federnden Arme 13.1, 13.2 und 13.3 können hierbei so gestaltet sein, daß sie entweder im Bereich der Schlitze 9 des Einsatzstücks 4 oder im Bereich der Kegelstumpfabschnitte 11.1 - 11.4 liegen, so daß zwischen dem Einsatzteil 4 und der Hülse 1 im Endbereich keine Behinderung vorliegt.

Weiterhin weist die Wulst 3 vorteilhafterweise im Stirnbereich 2 eine Einlaufschräge 16 auf, welche bei der Montage mit den Kegelstumpfabschnitten 11.1 - 11.4 des Einsatzteils 4 zusammenwirkt.

Bei dem Ausführungsbeispiel nach Fig. 4 und 5 sind vier federnde Arme 6.1 - 6.4 vorgesehen. Gemäß Fig. 6 besteht auch die Möglichkeit, daß eine größere Anzahl von federnden Armen 6 vorliegt, welche jeweils durch Schlitze 9 voneinander getrennt sind. Diese federnden Arme 6 weisen wiederum nicht näher bezeichnete Wulstabschnitte, Zylindermantelabschnitte sowie Kegelstumpfabschnitte im Endbereich auf - analog der Ausführungsform nach Fig. 4.

Bezüglich der Gestaltung der federnden Anordnung des Zapfens 8 der Hülse 1 ist bei dem Ausführungsbeispiel nach Fig. 1 bis 3 diese Hülse 8 über drei federnde Stege 13.1, 13.2 und 13.3 am Innenumfang 14 der Hülse 1 angeordnet. Nach Fig. 7 besteht jedoch auch die Möglichkeit, beispielsweise nur einen einzigen, stabil gestalteten federnden Steg 13 vorzusehen, welcher einerseits am Innenumfang 14 der Hülse 1' angeordnet ist und andererseits den Zapfen 8 mit dem Kegelstumpfbereich 12 elastisch haltert.

Insgesamt wird ein zweitteiliges Verbindungselement, bestehend aus Hülse 1 bzw. 1' und Einsatzteil 4 bzw. 4' geschaffen, welches gewährleistet, daß die Eindrückkraft bei der Montage auf einfache Weise niedriger ist als die Abzugskraft während der Demontage. Damit wird, was insbesondere im Kraftfahrzeugbereich wichtig ist, ein unerwünschtes Lösen, beispielsweise durch Rütteln während des Fahrens, einwandfrei vermieden.

## Patentansprüche

1. Zweiteiliges Verbindungselement mit einer an einem Träger, insbesondere einer Kraftfahrzeugkarosserie, befestigbaren Hülse, welche im dem Träger abgewandten Stirnbereich eine Wulst aufweist, und mit einem Einsatzteil mit einer im eingebauten Zustand die Wulst hintergreifenden Schulter, wobei
die Hülse (1; 1') in einem dem Träger zugekehrten Bereich einen in der Längsachse (A-A) federnd gelagerten, zentrischen Zapfen (8) aufweist und
die Schulter (5) des Einsatzteils (4; 4') aus mehreren, quer zur Längsachse (A-A) federnden Armen (6.1 - 6.4) besteht, welche innenseitig eine den zentrischen Zapfen (8) einlagernde Öffnung (7) begrenzen.

2. Verbindungselement nach Anspruch 1,
dadurch gekennzeichnet,
daß die federnden Arme (6.1 - 6.4) durch sich bis über die Schulter (5) hinaus in Längsrichtung erstreckende Schlitze (9) voneinander getrennt sind.

3. Verbindungselement nach Anspruch 2,
dadurch gekennzeichnet, daß die Schlitze (9) bis zum Endbereich konisch zulaufen.

4. Verbindungselement nach einem der vorhergehenden Ansprüche,
dadurch gekennzeichnet,
daß an die Schulterabschnitte der Arme (6.1 - 6.4) Zylindermantelabschnitte (10.1 - 10.4) und im Endbereich liegende Kegelstumpfabschnitte (11.1 -11.4) anschließen.

5. Verbindungselement nach Anspruch 1,
dadurch gekennzeichnet,
daß der zentrische Zapfen (8) im Endbereich der Hülse (1; 1') angeordnet ist und in etwa in das untere Drittel der Hülse (1; 1') ragt.

6. Verbindungselement nach Anspruch 5,
dadurch gekennzeichnet,
daß die Spitze des Zapfens (8) Kegelstumpfform (12) aufweist.

7. Verbindungselement nach Anspruch 5 oder 6,
dadurch gekennzeichnet,
daß der Zapfen (8) über mindestens einen Steg (13) in Längsachsrichtung federnd mit dem Innenumfang (14) der Hülse (1; 1') verbunden ist.

8. Verbindungselement nach Anspruch 7,
dadurch gekennzeichnet,
daß der Zapfen (8) über 3, gleichmäßig über den Innenumfang (14) verteilte Stege (13.1 - 13.3) mit der Hülse (1) verbunden ist.

9. Verbindungselement nach Anspruch 8,
dadurch gekennzeichnet,
daß die drei Stege (13.1 - 13.3) quer zur Längsachse (A-A) gewölbte Form aufweisen.

10. Verbindungselement nach einem der vorhergehenden Ansprüche,
dadurch gekennzeichnet,
daß die Länge (L) des Zapfens (8) kürzer als die Länge der Öffnung (7) in dem Einsatzteil (4; 4') ist.

11. Verbindungsteil nach Anspruch 10,
dadurch gekennzeichnet,
daß sich die Öffnung (7) durch das gesamte Eingriffsteil (4; 4') erstreckt.

12. Verbindungsteil nach einem der vorhergehenden Ansprüche,
dadurch gekennzeichnet,
daß der zentrische Zapfen (8) in dem dem Träger zugekehrten Endbereich der Hülse (1; 1') angeordnet ist.

## Claims

1. Two-part connection element having a sleeve which can be fastened on a carrier, in particular a motor-vehicle body, and has a bead in the end region remote from the carrier, and having an insert part with a shoulder which engages behind the bead in the installed state, the sleeve (1; 1') having, in a region which faces the carrier, a central peg (8) which is mounted in a resilient manner in the longitudinal axis (A-A), and the shoulder (5) of the insert part (4; 4') comprising a plurality of arms (6.1 - 6.4) which are resilient transverse to the longitudinal axis (A-A) and, on the inside, delimit an opening (7) which accommodates the central peg (8).

2. Connection element according to Claim 1, characterized in that the resilient arms (6.1 - 6.4) are separated from one another by slits (9) which extend beyond the shoulder (5) in the longitudinal direction.

3. Connection element according to Claim 2, characterized in that the slits (9) taper conically as far as the end region.

4. Connection element according to one of the preceding claims, characterized in that the shoulder sections of the arms (6.1 - 6.4) are adjoined by lateral-cylinder-surface sections (10.1 - 10.4) and truncated-cone sections (11.1 - 11.4) located in the end region.

5. Connection element according to Claim 1, characterized in that the central peg (8) is arranged in the end region of the sleeve (1; 1') and projects approximately into the bottom third of the sleeve (1; 1').

6. Connection element according to Claim 5, characterized in that the tip of the peg (8) has a frusto-conical shape (12).

7. Connection element according to Claim 5 or 6, characterized in that the peg (8) is connected to the inner circumference (14) of the sleeve (1; 1'), in a manner resilient in the direction of the longitudinal axis, via at least one web (13).

8. Connection element according to Claim 7, characterized in that the peg (8) is connected to the sleeve (1) via 3 webs (13.1 - 13.3) distributed uniformly over the inner circumference (14).

9. Connection element according to Claim 8, characterized in that the three webs (13.1 - 13.3) are of a shape which is curved transversely with respect to the longitudinal axis (A-A).

10. Connection element according to one of the preceding claims, characterized in that the length (L) of the peg (8) is shorter than the length of the opening (7) in the insert part (4; 4').

11. Connection part according to Claim 10, characterized in that the opening (7) extends through the entire insert part (4; 4').

12. Connection part according to one of the preceding claims, characterized in that the central peg (8) is arranged in that end region of the sleeve (1; 1') which faces the carrier.

## Revendications

1. Elément de liaison en deux parties, comprenant une douille qui peut être fixée à un support, notamment à une carrosserie de véhicule automobile, et présente un renflement dans la zone frontale tournée à l'opposé du support ; et une partie insérable munie d'un épaulement emprisonnant le renflement par-derrière à l'état intégré,
la douille (1 ; 1') comportant, dans une zone tournée vers le support, un tenon central (8) façonné élastiquement selon l'axe longitudinal (A-A), et
l'épaulement (5) de la partie insérable (4 ; 4') étant constitué de plusieurs bras (6.1 - 6.4) doués d'élasticité transversalement par rapport à l'axe longitudinal (A-A) et délimitant, intérieurement, une ouverture (7) logeant le tenon central (8).

2. Elément de liaison selon la revendication 1,
caractérisé par le fait
que les bras élastiques (6.1 - 6.4) sont séparés les uns des autres par des fentes (9) s'étendant, dans le sens longitudinal, jusqu'au-delà de l'épaulement (5).

3. Elément de liaison selon la revendication 2,
caractérisé par le fait
que les fentes (9) s'achèvent coniquement jusqu'à la région extrême.

4. Elément de liaison selon l'une des revendications précédentes,
caractérisé par le fait
que des segments d'enveloppe cylindrique (10.1 - 10.4), et des segments tronconiques (11.1 - 11.4) situés dans la région extrême, se rattachent aux segments épaulés des bras (6.1 - 6.4).

5. Elément de liaison selon la revendication 1,
caractérisé par le fait
que le tenon central (8) est disposé dans la région extrême de la douille (1 ; 1') et s'engage sensiblement dans le tiers inférieur de ladite douille (1 ; 1').

6. Elément de liaison selon la revendication 5,
caractérisé par le fait
que la pointe du tenon (8) revêt la forme d'un tronc de cône (12).

7. Elément de liaison selon la revendication 5 ou 6,
caractérisé par le fait
que le tenon (8) est relié au pourtour intérieur (14) de la douille (1 ; 1') par l'intermédiaire d'au moins une nervure (13), avec élasticité dans la direction de l'axe longitudinal.

8. Elément de liaison selon la revendication 7,
caractérisé par le fait
que le tenon (8) est relié à la douille (1) par l'intermédiaire de trois nervures (13.1 - 13.3) uniformément réparties sur le pourtour intérieur (14).

9. Elément de liaison selon la revendication 8,
caractérisé par le fait
que les trois nervures (13.1 - 13.3) présentent une forme bombée transversalement par rapport à l'axe longitudinal (A-A).

10. Elément de liaison selon l'une des revendications précédentes,
caractérisé par le fait
que la longueur (L) du tenon (8) est plus petite que la longueur de l'ouverture (7) ménagée dans la partie insérable (4 ; 4').

11. Pièce de liaison selon la revendication 10,
caractérisée par le fait
que l'ouverture (7) parcourt intégralement la partie (4 ; 4') de venue en prise.

12. Pièce de liaison selon l'une des revendications précédentes,
caractérisée par le fait
que le tenon central (8) est disposé dans la région extrême de la douille (1 ; 1') qui est tournée vers le support.
